(19) Europäisches Patentamt
European Patent Office
Office européen des brevets

(11) **EP 1 687 623 B1**

(12) **EUROPEAN PATENT SPECIFICATION**

(45) Date of publication and mention
of the grant of the patent:
**23.05.2007 Bulletin 2007/21**

(21) Application number: **04810888.0**

(22) Date of filing: **12.11.2004**

(51) Int Cl.:
***G01N 33/20*** (2006.01)  ***G21C 17/00*** (2006.01)

(86) International application number:
**PCT/US2004/037879**

(87) International publication number:
**WO 2005/050667 (02.06.2005 Gazette 2005/22)**

(54) **SYSTEM AND METHOD FOR ESTIMATING HELIUM PRODUCTION IN STAINLESS STEEL CORE SHROUDS OF NUCLEAR REACTORS**

SYSTEM UND VERFAHREN ZUR ABSCHÄTZUNG DER HELIUMPRODUKTION IN EDELSTAHLKERNMANTELN VON KERNREAKTOREN

SYSTEMES ET PROCEDES D'ESTIMATION DE LA PRODUCTION D'HELIUM DANS DES COIFFES EN ACIER INOXYDABLE DE REACTEURS NUCLEAIRES

(84) Designated Contracting States:
**DE SE**

(30) Priority: **14.11.2003 US 714417**

(43) Date of publication of application:
**09.08.2006 Bulletin 2006/32**

(73) Proprietor: **GENERAL ELECTRIC COMPANY (a New York Corporation)
Schenectady, New York 12345 (US)**

(72) Inventors:
• **SITARAMAN, Shivakumar
San Jose, CA 95120 (US)**
• **CHIANG, Ren-Tai
San Jose, CA 95120 (US)**
• **JENKINS, Alton, Lewis
Surf City, NC 28445 (US)**

(74) Representative: **Pedder, James Cuthbert
London Patent Operation,
General Electric International, Inc.,
15 John Adam Street
London WC2N 6LU (GB)**

(56) References cited:
• **PATENT ABSTRACTS OF JAPAN vol. 2000, no. 09, 13 October 2000 (2000-10-13) & JP 2000 162369 A (HITACHI LTD), 16 June 2000 (2000-06-16)**
• **PATENT ABSTRACTS OF JAPAN vol. 1996, no. 01, 31 January 1996 (1996-01-31) & JP 07 244190 A (TOSHIBA CORP), 19 September 1995 (1995-09-19)**

**Description**

CROSS REFERENCE TO RELATED APPLICATIONS

This application is a continuation-in-part of U.S. Patent Application No. 10/210,214 filed July 31, 2002.

BACKGROUND OF THE INVENTION

This invention relates generally to nuclear reactors and more particularly, to systems and methods for estimating helium production in the stainless steel shroud in a boiling water nuclear reactor.

A reactor pressure vessel (RPV) of a boiling water reactor (BWR) typically has a generally cylindrical shape and is closed at both ends, e.g., by a bottom head and a removable top head. A core assembly is contained within the RPV and includes the core support plate, fuel bundles, control rod blades and a top guide. A core shroud typically surrounds the core assembly and is supported by a shroud support structure. Particularly; the shroud has a generally cylindrical shape and surrounds both the core plate and the top guide. There is a space or annulus located between the cylindrical reactor pressure vessel and the cylindrically shaped shroud.

The core of the reactor includes an array of fuel bundles with square cross section. The fuel bundles are supported from below by a fuel support. Each fuel support supports a group of four fuel bundles, with the exception of the peripheral fuel supports, which support a single fuel bundle. The thermal power generated in the core can be decreased by inserting control rods into the core, and the generated thermal power can be increased by retracting control rods from the core. In some BWR's, the control rods have a cruciform cross section with blades that can be inserted between the fuel bundles of a group of four.

Internal structures of operating BWRs are susceptible to various corrosive and cracking processes. Stress corrosion cracking (SCC) is one known phenomenon occurring in reactor components, such as structural members, piping, control rod guide tubes, fasteners, and welds, exposed to high temperature water. The reactor components are subject to a variety of stresses associated with, for example, differences in thermal expansion, the operating pressure needed for the containment of the reactor cooling water, and other sources such as residual stresses from welding, cold working and other inhomogeneous metal treatments. In addition, water chemistry, welding, heat treatment and radiation can increase the susceptibility of metal in a component to SCC.

It has been recognized that radiation creates oxygen and hydrogen peroxide via radiolysis, and that these chemical species significantly increase the electrochemical corrosion potential (ECP) throughout the primary circuit. This, in turn, assists stress corrosion cracking (SCC) and irradiation-assisted stress corrosion cracking (IASCC) of internal components of RPVs. Neutron radiation is especially efficient at creating oxygen and hydrogen peroxide in the reactor water within the core, while gamma radiation tends to promote the reduction of these species by hydrogen within the downcomer.

Also, helium deposition in the shroud and other stainless steel components can be caused by the interaction of neutrons, in general, and thermal neutrons, in particular, with boron impurities in the stainless steel material. The neutron field falls off radially as the RPV side-wall is approached. Knowledge of helium production in stainless steel material subjected to neutron fields is important in determining if the irradiated components can be re-welded. Helium deposition in the shroud is important because of the need to perform welding on the shroud during maintenance and repair procedures. As the helium content of a stainless steel component, for example, the shroud, increases, the weldability of the stainless steel component decreases.

JP-2000-162369 and JP-7-244 190 describe both analytical measurement methods for estimating the helium content in the shroud requiring intervention on-site.

BRIEF DESCRIPTION OF THE INVENTION

In one aspect, a method for estimating a helium content of a stainless steel core shroud in a boiling water nuclear reactor is provided. The reactor includes a reactor pressure vessel and a reactor core surrounded by the core shroud positioned in the reactor pressure vessel. The method includes determining a neutron fluence for predetermined areas of the reactor, and estimating a helium content of the stainless steel shroud at predetermined areas of the reactor using the following equation:

$$C_{He} = 1031 * \left(1 - e^{-b_I * \phi_I}\right)$$

where $C_{He}$ is the helium concentration as atomic parts per billion of helium in the stainless steel shroud per weight parts per million of boron in the stainless steel shroud, $b_j$ is a value between about 2.50e$^{-21}$ and about 5.00e$^{-21}$, $\phi_j$ is fluence expressed as neutrons per square centimeter, and subscript j denotes thermal fluence or fast fluence.

In another aspect, a method for estimating a helium content of a stainless steel core shroud in a boiling water nuclear reactor is provided. The reactor includes a reactor pressure vessel and a reactor core surrounded by the core shroud positioned in the reactor pressure vessel. The method includes generating a geometric configuration of a nuclear reactor core and surrounding components, generating a fuel composition distribution, and calculating three-dimensional nuclide concentrations for the fuel rods and the water surrounding the fuel rods using the generated geometric configuration and generated fuel composition distribution. The method also includes calculating neutron fluxes using a Monte Carlo radiation transport criticality mode methodology, and generating neutron fluences for predetermined areas of the reactor. The method further includes estimating a helium content of the stainless steel shroud at predetermined areas of the reactor using the following equation:

$$C_{He} = 1031 * \left(1 - e^{-b_j * \phi_j}\right)$$

where $C_{Hc}$ is the helium concentration as atomic parts per billion of helium in the stainless steel shroud per weight parts per million of boron in the stainless steel shroud, $b_j$ is a value between about 2.50e$^{-21}$ and about 5.00e$^{-21}$, $\phi_j$ is fluence expressed as neutrons per square centimeter, and subscript j denotes thermal fluence or fast fluence.

In another aspect, a system for simulating a helium content of a stainless steel core shroud in a nuclear reactor is provided. The reactor includes a reactor pressure vessel and a reactor core surrounded by the core shroud positioned in the reactor pressure vessel. The system includes a computer configured to generate a geometric configuration of a nuclear reactor core and surrounding components, generate a fuel composition distribution, and calculate three-dimensional nuclide concentrations for the fuel rods and the water surrounding the fuel rods using the generated geometric configuration and generated fuel composition distribution. The computer is further configured to calculate neutron fluxes using a Monte Carlo radiation transport criticality mode methodology, and generate neutron fluences for predetermined areas of the reactor. The computer is further configured to estimate a helium content of the stainless steel shroud at predetermined areas of the reactor using the following equation:

$$C_{He} = 1031 * \left(1 - e^{-b_j * \phi_j}\right)$$

where $C_{He}$ is the helium concentration as atomic parts per billion of helium in the stainless steel shroud per weight parts per million of boron in the stainless steel shroud, $b_j$ is a value between about 2.50e$^{-21}$ and about 5.00e$^{-2\,1}$, $\phi_j$ is fluence expressed as neutrons per square centimeter, and subscript j denotes thermal fluence or fast fluence.

BRIEF DESCRIPTION OF THE DRAWINGS

Figure 1 is a sectional view, with parts cut away, of a boiling water nuclear reactor pressure vessel.

Figure 2 is a flow chart of a method for calculating a helium content of stainless steel components in a nuclear reactor in accordance with an embodiment of the present invention.

Figure 3 is a flow chart of neutron flux determinations used in the method shown in Figure 2

Figure 4 is a simple r-θ view of an MNCP model.

Figure 5 is a simple schematic r-z view of the boiling water nuclear reactor pressure vessel shown in Figure 1.

DETAILED DESCRIPTION OF THE INVENTION

A method for estimating a helium content of a stainless steel shroud in a boiling water nuclear reactor is described below in detail. The method includes determining the neutron fluence at predetermined locations in the reactor, for example, at the shroud. Neutron fluences are determined by measuring neutron fluxes in a reactor or by using computational simulator systems.

In one embodiment, neutron fluence computational systems include a Monte Carlo computer program, a fuel simulator, a core simulator, and pre-, inter-, and post-processors among the Monte Carlo, fuel and core simulators, and are described below in detail. Interpolating various fuel exposure- and void-dependent nuclide data tracked by core and fuel simulators generates material composition input for the Monte Carlo program. The Monte Carlo computer program is run in a criticality mode in one exemplary embodiment, or in a combination of criticality mode and fixed source mode in another embodiment, to compute neutron fluxes at ex-core components of interest at various exposure points of operational cycles for a nuclear power reactor with detailed core and fuel configurations. The neutron fluxes at various exposure points of the cycles are then integrated over time to obtain the neutron fluence at the locations of interest. The neutron fluence is then used to calculate the helium concentration in the core shroud of the reactor.

In one embodiment, the Monte Carlo, fuel and core simulator, and pre-, inter-, and post-processor software reside in a computer program product on computer readable media, for example, a magnetic floppy disk, a magnetic hard drive, CD drive or DVD drive. In the exemplary embodiment, the computer is a networked VAX-VMS/PC-based system. In another embodiment, a main-frame computer or other work-stations are used.

Computer modeling of the internal structure and components of a nuclear reactor pressure vessel and performing calculations of the behavior of thermal neutron fluence and helium production inside the reactor pressure vessel yield design and operation benefits. Knowledge of helium production via nuclear reactions in stainless steel materials subjected to neutron fields is important in determining if irradiated stainless steel reactor components can be re-welded.

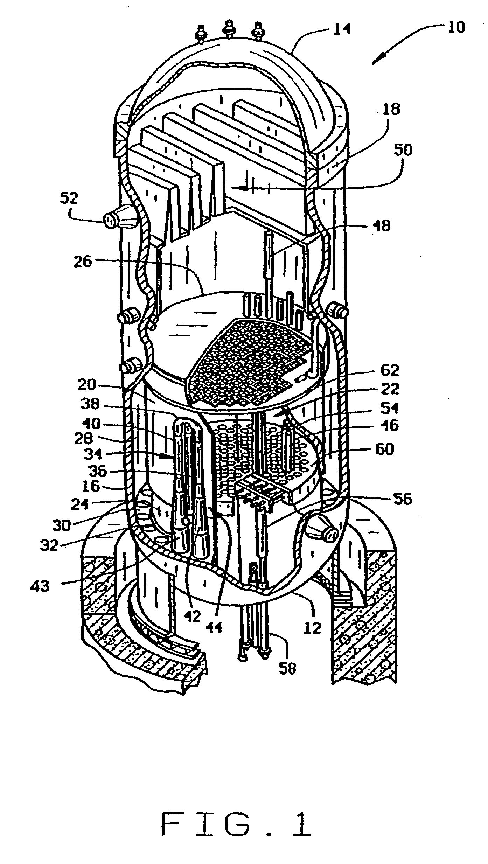

Referring to the drawings, Figure 1 is a sectional view, with parts cut away, of a boiling water nuclear reactor pressure vessel (RPV) 10. RPV 10 has a generally cylindrical shape and is closed at one end by a bottom head 12 and at its other end by a removable top head 14. A side-wall 16 extends from bottom head 12 to top head 14. Side-wall 16 includes a top flange 18. Top head 14 is attached to top flange 18. A cylindrically shaped core shroud 20 surrounds a reactor core 22. Shroud 20 is supported at one end by a shroud support 24 and includes a removable shroud head 26 at the other end. An annulus 28 is formed between shroud 20 and side-wall 16. A pump deck 30, which has a ring shape, extends between shroud support 24 and RPV side-wall 16. Pump deck 30 includes a plurality of circular openings 32, with each opening housing a jet pump 34. Jet pumps 34 are circumferentially distributed around core shroud 20. An inlet riser pipe 36 is coupled to two jet pumps 34 by a transition assembly 38. Each jet pump 34 includes an inlet mixer 40, a diffuser 42, and a tailpipe assembly 43. Inlet riser 36 and two connected jet pumps 34 form a jet pump assembly 44.

Thermal power is generated within core 22, which includes fuel bundles 46 of fissionable material. Water circulated up through core 22 is at least partially converted to steam. Steam separators 48 separates steam from water, which is recirculated. Residual water is removed from the steam by steam dryers 50. The steam exits RPV 10 through a steam outlet 52 near vessel top head 14.

The amount of thermal power generated in core 22 is regulated by inserting and withdrawing control rods 54 of neutron absorbing material, such as for example, boron carbide. To the extent that control rod 54 is inserted into core 22 between fuel bundles 46, it absorbs neutrons that would otherwise be available to promote the chain reaction which generates thermal power in core 22. Control rod guide tubes 56 maintain the vertical motion of control rods 54 during insertion and withdrawal.

Control rod drives 58 effect the insertion and withdrawal of control rods 54. Control rod drives 58 extend through bottom head 12.

Fuel bundles 46 are aligned by a core plate 60 located at the base of core 22. A top guide 62 aligns fuel bundles 46 as they are lowered into core 22. Core plate 60 and top guide 62 are supported by core shroud 20.

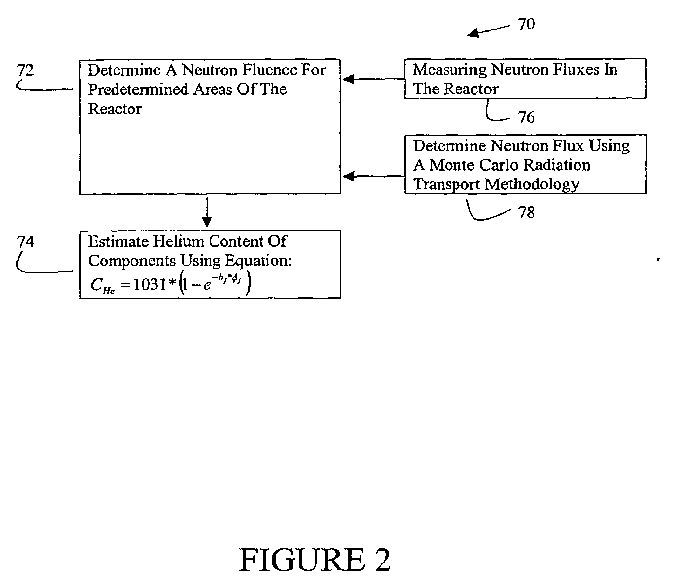

Figure 2 is a flow chart of a method 70 for calculating a helium content of shroud 20 in boiling water nuclear reactor 10 in accordance with an exemplary embodiment of the present invention. In an exemplary embodiment, method 70 includes determining 72 fluences for predetermined areas of reactor 10, for example, at shroud 20, and then estimating 74 the helium content of shroud 20 using the following using the following equation:

$$C_{He} = 1031 * \left(1 - e^{-b_j * \phi_j}\right)$$

where $C_{He}$ is the helium concentration as atomic parts per billion of helium in the stainless steel shroud per weight parts per million of boron in the shroud, $b_j$ is a value between about $2.50e^{-21}$ and about $5.00e^{-21} cm^2$, $\phi_j$ is fluence expressed as neutrons per square centimeter, and subscript j denotes thermal fluence or fast fluence. Either thermal fluence or fast fluence can be used in the above equation. This correlation estimates the helium production in shroud 20 to within 10 percent for thermal fluences up to $1.0 e^{21} n/cm^2$ and for fast fluences up to $5.0 e^{20} n/cm^2$. Beyond this fluence limit, a two-stage nickel reaction has contributions to helium production in the stainless steel shroud that exceeds 10 percent.

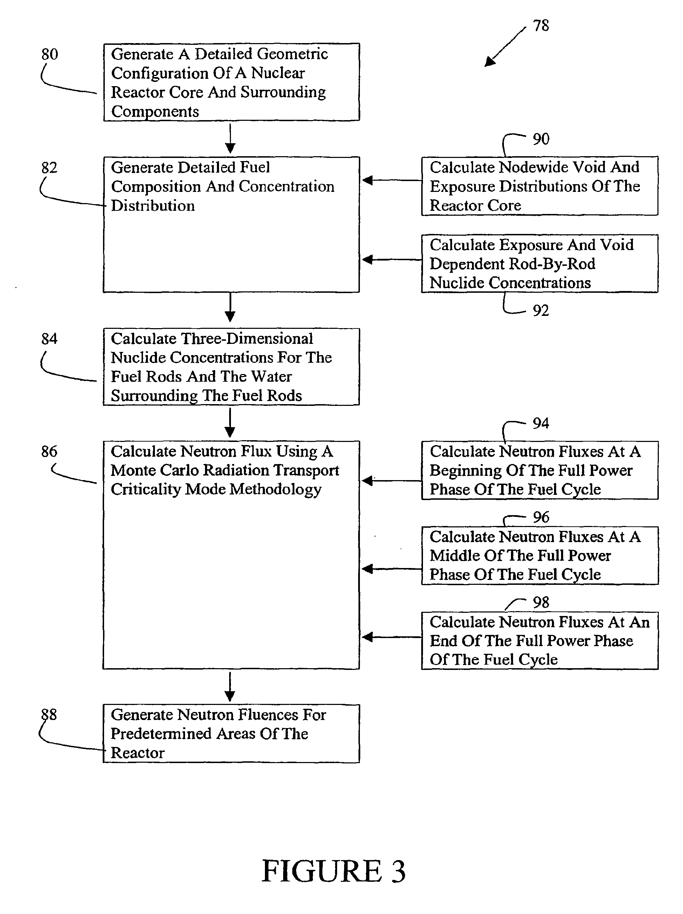

Referring also to Figure 3, in one embodiment, determining 72 neutron fluences for predetermined areas of reactor 10 can be accomplished by measuring 76 neutron fluxes at the predetermined areas of reactor 10 and calculating neutron fluences using the measured thermal neutron fluxes.

In another embodiment, determining 72 neutron fluences for predetermined areas of reactor 10 is accomplished by using a Monte Carlo radiation transport methodology to determine 78 thermal neutron fluxes at the predetermined areas of reactor 10. In other alternate embodiments, determining 72 neutron fluences for predetermined areas of reactor 10 can be accomplished by using any suitable reactor simulator program.

The production of helium by neutron interactions with the boron impurities in shroud 20 is potentially a factor that affects the weldability of this component. A correlation was developed to calculate the production of helium at shroud 20 when the neutron field is known.

A set of tests was performed on stainless steel samples taken at locations near the shroud and at a midway location between the shroud and the pressure vessel in a boiling water nuclear reactor (BWR). These samples were irradiated for a period of one fuel cycle in the operating BWR. The total helium was measured using mass spectrometric techniques and presented in atom parts per billion in stainless steel. The initial boron content in the samples was also determined using a subsequent irradiation in a known neutron field.

Neutron fluences were calculated at these locations using three dimensional Monte Carlo radiation transport calculations using successive criticality and fixed mode solutions. These neutron fields were validated against thermal and fast activation data.

Using the validated neutron fluences from the calculations and the corresponding measured quantity of helium, a correlation was derived to calculate the amount of helium in a component. The fundamental equation for helium production from boron-10 can be written as:

$$\text{Atoms of He per B-10 atom} = 1 - e^{-\text{average helium production cross section} * \text{fluence}}$$

Using the calculated values of neutron fluences and the measured boron content of the stainless steel test samples, and the known densities of stainless steel and boron, the following correlation was developed:

$$C_{He} = 1031 * \left(1 - e^{-b_j * \phi_j}\right)$$

where $C_{He}$ is the helium concentration as atomic parts per billion of helium in a stainless steel shroud per weight parts per million of boron in the stainless steel shroud, $\phi_j$ is fluence expressed as neutrons per square centimeter, and the subscript j denotes thermal fluence, fast fluence, or total fluence. The value of $b_j$ varies between about $2.50e^{-21}$ and about $5.00e^{-21}$ depending on the location of in the reactor and the type of neutron fluence, and represents an effective helium production cross section. Particularly, for thermal neutron fluence with neutron energies below 0.4 eV (electron-Volt), the value of $b_j$ ranges from about $2.20e^{-21}$ to about $2.50e^{-21}$, corresponding to the lower and upper limits of the estimate. For fast neutron fluence with neutron energies above 0.1 MeV, the value of $b_j$ ranges from about $3.80e^{-21}$ to about $5.00e^{-21}$, corresponding to the lower and upper limits of the estimate.

Determining 78 neutron fluxes using a Monte Carlo radiation transport methodology includes generating 80 a detailed geometric configuration of nuclear reactor core 22 and surrounding components, generating 82 detailed fuel composition and concentration distributions, and calculating 84 three-dimensional nuclide concentrations for the fuel rods of fuel bundles 54 and the water surrounding the fuel rods. Determining 78 neutron fluxes using a Monte Carlo radiation transport methodology also includes using the detailed geometric configuration of core 22, the detailed composition and concentration distributions, and the calculated three-dimensional nuclide concentrations for the fuel rods and the water surrounding the fuel rods as input to calculate 86 neutron fluxes using a Monte Carlo radiation transport criticality mode methodology. The calculated thermal neutron fluxes are used to generate 88 a neutron fluence map for the predetermined areas of reactor 10.

Generating 82 detailed fuel composition and concentration distributions include calculating 90 node-wise void and exposure distributions of reactor core 22 and calculating 92 exposure and void dependent rod-by-rod nuclide concentrations. Calculating 90 node-wise void and exposure distributions of reactor core 22 is accomplished in the exemplary embodiment by a 3-D neutron diffusion BWR simulator, for example, PANACEA. In alternate embodiments, other core tracking simulators can be used. Calculating 92 exposure and void dependent rod-by-rod nuclide concentrations is accomplished in the exemplary embodiment by a neutron transport and diffusion coupled lattice design computer program, for example; TGBLA. In alternate embodiments, other lattice design simulators can be used.

TGBLA uses ENDF/B-V cross-section library, integral transport theory methods to solve for cell neutron spectra in thermal, resonance and fast energy range, and leakage-dependent diffusion theory methods to solve for lattice $k_\infty$ and power distribution. PANACEA receives lattice-averaged cross sections from TGBLA and solves a modified one-group diffusion equation for $k_{eff}$ and power distribution of a BWR core. The PANACEA $k_{eff}$ preserves the fundamental mode $k_{eff}$ of the three-group core neutron diffusion equations.

The ENDF (Evaluated Nuclear Data File) format libraries were originally developed in the United States and are controlled by the Cross Section Evaluation Working Group (CSEWG) of the US Department of Energy and maintained at the National Nuclear Data Center (NNDC) at the Brookhaven National Laboratory. In general, ENDF-format libraries are computer-readable files of nuclear data that describe nuclear reaction cross sections, the distributions in energy and angle of reaction products, the various nuclei produced during nuclear reactions, the decay modes and product spectra resulting from the decay of radioactive nuclei, and the estimated errors in these quantities.

The Monte Carlo radiation transport methodology is accomplished in the exemplary embodiment by, for example MCNP, a Monte Carlo code for neutron, photon, and electron transport. In alternate embodiments, other Monte Carlo programs can be used. The MCNP fuel composition input is generated by interpolating the fuel exposure- and void-dependent nuclide data tracked by PANACEA and TGBLA. Three dimensional nuclide concentrations for all segments of fuel rods and their surrounding water concentrations in core 22 are calculated for the MCNP input setup. The MCNP input is set up using an automation package called MIG (MCNP Input Generation Module). The MCNP calculations are performed at the beginning (BOC) 94, the middle (MOC) 96 and the end (EOC) 98 of the full power phase of the cycle. After each MCNP calculation, the in-core fast neutron flux is benchmarked against plant data using a MCNP output processing computer program, called POSTMC.

The data transfers from PANACEA and TGBLA through CEDAR (Comprehensive Engineering Data Archival and Retrieval) files using subroutines in the CEDAR computer program. A PANACEA core CEDAR file contains core node-wise exposure and instantaneous and historical void distributions, and a TGBLA lattice CEDAR file contains fuel lattice exposure- and void-dependent rod-by-rod nuclide concentrations at standard exposure points: 0, 0.2, 1, 2, 3, 4, 5, 6, 7, 8, 9, 10, 12.5, 15, 17.5, 20, 25, 30,...,60 GWd/ST and at three standard void points: 0, 0.4 and 0.7 void fractions. Core bundle loading information and bundle lattice composition information are also input. The node-wise nuclide concentrations in each fuel rod of the core are determined through historical-void quadratic fitting and exposure linear fitting, and the surrounding water concentrations are determined using the instantaneous void data.

One of the major problems in performing detailed MCNP calculations is the huge amount of fuel composition input data. To reduce the fuel composition input size with minimal sacrifice of accuracy, the following approximations are made in the physics model:

> 1. Nuclide concentrations in interior regular fuel rods of each lattice are lumped together by preserving the absorption rates.

> 2. Nuclide concentrations in gadolinia fuel rods of each lattice are lumped by preserving the absorption rates, based on distinct initial Gd rod types; the types are differentiated by different gadolinia weight percent and/or different enrichment.

> 3. Thirty-seven explicit nuclides, including major fissionable nuclides and fission products are used, as shown below in Table I, and other minor nuclides are incorporated in and represented implicitly by the explicit nuclides in terms of effective concentrations by preserving the absorption rate. For example, a multiplier on $^{103}$Rh is used to accommodate the pseudo fission product, $^{143}$Pr, $^{101}$Ru and $^{103}$Ru by preserving the absorption rate.

> 4. Octant or quarter-symmetric fuel loading is used.

> 5. Distinct axial nodes are used.

TABLE I

| 37 Explicit Nuclides Model | | | |
|---|---|---|---|
| ID | Nuclides | ID | Nuclides |
| 1 | U234 | 20 | Xe131+N3* |
| 2 | U235 | 21 | Pm147+N4* |
| 3 | U236 | 22 | Pm148m |
| 4 | U238 | 23 | Sm147 |

(continued)

| 37 Explicit Nuclides Model | | | |
|---|---|---|---|
| 5 | Pu239 | 24 | Sm149 |
| 6 | Pu240 | 25 | Sm150 |
| 7 | Pu241 | 26 | Sm151 |
| 8 | Pu242 | 27 | Sm152 |
| 9 | Np237+N1 * | 28 | Eu153 |
| 10 | Pu238 | 29 | Eu154 |
| 11 | Am241 | 30 | Eu155 |
| 12 | Am243 | 31 | Gd154 |
| 13 | Cm244 | 32 | Gd155 |
| 14 | Rh103+N2* | 33 | Gd156 |
| 15 | Rh105 | 34 | Gd157 |
| 16 | Cs133 | 35 | Gd158 |
| 17 | Xe135 | 36 | Nd145 |
| 18 | Nd143 | 37 | O16 |
| 19 | Tc99 | | |
| *N1 are Np239 and Cm242; N2 are Pseudo fission product, Pr143, Ru101 and Ru103; N3 is Xe133; N4 is Pm149. | | | |

From experimentation, it was discovered that the results of MCNP in-core neutronic calculations are sensitive to the distribution of water and $^{135}$Xe for a given fuel composition setup in the core. Consequently, the axial in-channel and out-channel water densities and $^{135}$Xe concentrations are examined. The nodal water densities and the nodal in-channel void fractions are available in the PANACEA output, from which axial in-channel and out-channel water densities are derived for each nodal lattice. A set of typical axial in-channel and out-channel water density distribution in a peripheral bundle and in a central bundle are shown below in TABLE II.

TABLE II

| Typical Axial In-Channel and Out-Channel Water Density (G/Cm$^3$) Distribution in a Peripheral Bundle and in a Central Bundle | | | | |
|---|---|---|---|---|
| Type | Peripheral Bundle (1,8) | | Central Bundle (9,9) | |
| Axial node | In-channel | Out-channel | In-channel | Out-channel |
| 1 | 0.76289 | 0.76314 | 0.76280 | 0.76305 |
| 2 | 0.76177 | 0.76314 | 0.76124 | 0.76260 |
| 3 | 0.76015 | 0.76237 | 0.75890 | 0.76077 |
| 4 | 0.75840 | 0.76115 | 0.75636 | 0.75858 |
| 5 | 0.75653 | 0.75969 | 0.75368 | 0.75608 |
| 6 | 0.75454 | 0.75797 | 0.73573 | 0.75587 |
| 7 | 0.75243 | 0.75598 | 0.72030 | 0.75574 |
| 8 | 0.73743 | 0.75573 | 0.68875 | 0.75570 |
| 9 | 0.73486 | 0.75554 | 0.64638 | 0.75372 |
| 10 | 0.72384 | 0.75543 | 0.59971 | 0.75343 |

(continued)

| Typical Axial In-Channel and Out-Channel Water Density (G/Cm³) Distribution in a Peripheral Bundle and in a Central Bundle | | | | |
|---|---|---|---|---|
| Type | Peripheral Bundle (1,8) | | Central Bundle (9,9) | |
| 11 | 0.70434 | 0.75539 | 0.55323 | 0.75313 |
| 12 | 0.67857 | 0.75227 | 0.51013 | 0.75280. |
| 13 | 0.64944 | 0.75094 | 0.47138 | 0.75243 |
| 14 | 0.61930 | 0.75049 | 0.43713 | 0.75202 |
| 15 | 0.58886 | 0.75008 | 0.40716 | 0.75158 |
| 16 | 0.55955 | 0.74959 | 0.38016 | 0.75111 |
| 17 | 0.53144 | 0.74912 | 0.36001 | 0.75050 |
| 18 | 0.50484 | 0.74865 | 0.34152 | 0.75004 |
| 19 | 0.48042 | 0.74818 | 0.32456 | 0.74957 |
| 20 | 0.45818 | 0.74772 | 0.30944 | 0.74911 |
| 21 | 0.43824 | 0.74728 | 0.29597 | 0.74865 |
| 22 | 0.42094 | 0.74686 | 0.28422 | 0.74821 |
| 23 | 0.40686 | 0.74647 | 0.27443 | 0.74779 |
| 24 | 0.39632 | 0.74614 | 0.26813 | 0.74744 |
| 25 | 0.39042 | 0.74590 | 0.26578 | 0.74715 |

Since the $^{135}$Xe concentrations are generated by assuming constant power density (normally, 50 W/cm³) in TGBLA depletion and since the $^{135}$Xe concentrations are sensitive to the local power history, the power-consistent $^{135}$Xe concentrations are determined by PANACEA-local-power weighting and by assuming that $^{135}$Xe concentrations reach equilibrium. Note that the equilibrium $^{135}$Xe concentration ($^{135}$Xe$_{eq}$) is given by:

$$^{135}\text{Xe}_{eq} = \frac{(\gamma_I + \gamma_{Xe})\ (\text{Power density})}{\lambda_{Xe} + \sigma_{a,Xe}\ \phi_T}$$

where $\gamma_1$ and $\gamma_{Xe}$ are fission yield of $^{135}$I and $^{135}$Xe, $\lambda_{Xe}$ is the decay constant of $^{135}$Xe, $\sigma_{a,Xe}$ is the microscopic absorption cross section of $^{135}$Xe, and $\phi_T$ is the neutron flux. Consequently, the equilibrium $^{135}$Xe concentration is roughly proportional to the local power.

Incorporating all preceding approximations in PREMC, an MCNP input processing computer program, and performing the PREMC calculations yield the node-wise fuel rod nuclide concentrations for the MCNP input.

The Monte Carlo based portion of the calculations includes three stages. The first stage involves the development of the reactor system model. The next stage creates core models based at various discrete points in the fuel cycle. The core model at each state point is merged with the reactor system model, and criticality calculations are performed to obtain neutron fields in the annular region of the reactor. This is done using the MCNP Monte Carlo radiation transport computer code available from Los Alamos National Laboratory. The last stage generates a neutron fluence map in predetermined areas, for example, shroud weld locations.

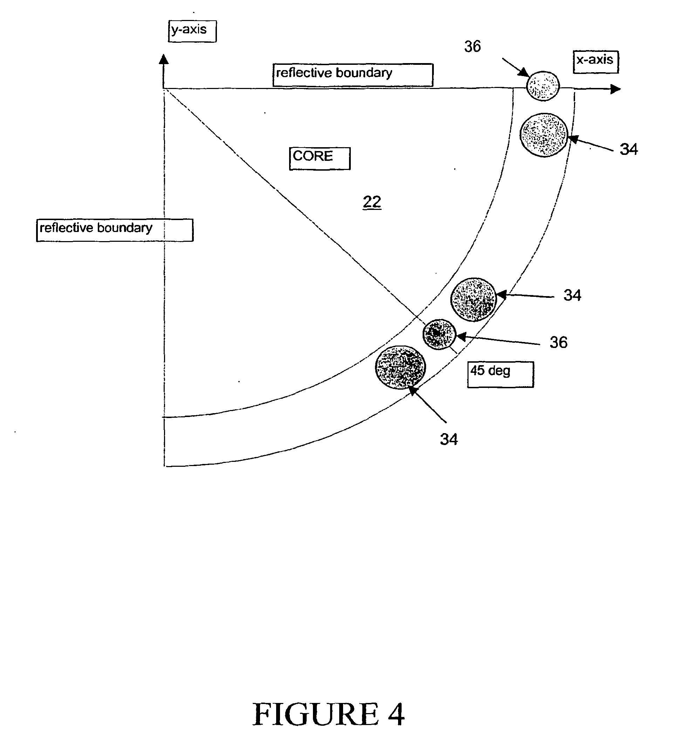

The MCNP model is built in two parts. The first part consists of modeling the in-shroud region of the reactor, excluding the fuel bundles, the RPV, and the annular region between the RPV and the shroud, including the appropriate number of jet pumps. This model remains fixed for the entire cycle. The next part consists of using the processed fuel and in-core water data obtained from the PANACEA/TGBLA runs and processed with the PREMC processor to obtain an MCNP model of the core. The in-core data remains fixed for a given discrete time step and changes whenever discrete time steps are taken to simulate the whole cycle. The model is set up with quadrant symmetry to accommodate jet pumps 34. Figure 4 shows a simple r-θ view of the model. The x and y axes have reflective boundary conditions (i.e.,

any particle that reaches either surface undergoes specular reflection). The region outside the RPV wall is void.

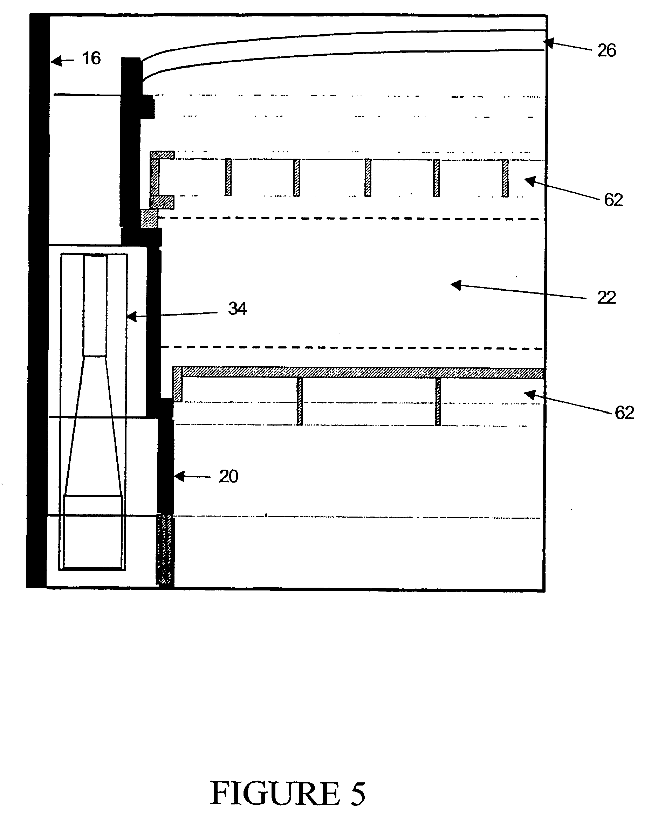

Figure 5 shows a schematic with the r-z view of the system. The inside of shroud 20 is modeled with the appropriate systems inside it modeled explicitly. The bottom of the model is at an elevation of 180 cm from RPV bottom head 12. Control rod guide tubes 56 are modeled with control rod 54 present. These extended from elevation 180 through core plate 60. Core plate 60 and the support beams are also modeled explicitly. Control rods 54 are modeled in detail with the central support, blade wing sheaths, and the poison tubes (not shown).

Reactor core 22 is modeled above core plate 60, and top guide 62 is modeled without the top of the fuel bundles 46 that are present in them. No structural components are modeled above top guide 62. The shroud wall and shroud head 26 and RPV wall 16 are all modeled with their nominal dimensions.

A simple jet pump model is developed with the ram's head 38, mixer 40, diffuser 42, and tailpipe assemblies 43 (shown in Figure 1). At the present time, the brackets and other support hardware associated with jet pumps 34 have been omitted. The model required one full pair of jet pumps 34 with a riser 36 and a half set, as shown in Figure 4, to account for 12 pumps 34 and six risers 36. The jet pump model is created independently and patched into the reactor system model using the proper coordinate transformations.

An in-core model is developed separately and merged with the reactor system model to produce the full calculational model for the MCNP criticality calculation. In the exemplary embodiment, the active core region is modeled with 25 distinct axial nodes, each 15.24 cm high (6 inches). This scheme is consistent with the simulator code, PANACEA. Each node has a different average exposure and in-channel void fraction, making it necessary to model 1500 different lattices in a quarter core (25 nodes x 60 bundles). In the early part of the cycle, octant symmetric blade patterns make it possible to have octant symmetric fuel and void distributions, thus reducing the number of unique lattices to 825 (25 nodes x 33 bundles). The channels and fuel rod cladding are standard Zircaloy, approximated in the model as natural zirconium.

Inside each channel of the fuel lattices, the fuel rods having a fuel composition and the appropriate water density are modeled. The process of generating the input for the core model in MCNP was fully automated to accommodate either quadrant symmetric or octant symmetric fuel specifications. The model also uses the repeated structures capabilities of MCNP to minimize the size of the input. The simulation can be run on any suitable computer system, for example, a DEC Alpha-500 workstation with the Open VMS Version 7.1 operating system.

In the exemplary embodiment, four exposure points in the fuel cycle of reactor 10 are selected to study. These are at cycle exposures of BOC, MOC, EOC, and a point representing a state that is approximately midway during the coast down phase of the fuel cycle. These cases are run and a source for each case is saved on a surface that encompasses the core region at a radius of 151 cm. An intermediate run is made using the quadrant symmetric model and the surface source for each exposure point. The angular, energy and spatial distributions are saved on surfaces that were within 0.025 cm of the surface source. Twenty-four azimuths and twenty-five axial regions are used for obtaining the spatial distributions. The angle and energy distributions are obtained in three axial regions: low, middle and top regions. Separate runs are made for fast and thermal cases. The distributions obtained from the intermediate runs are then used to describe a fixed source and the final runs to obtain specific activities at predetermined locations.

The 24 azimuthal regions are expanded to 90 azimuthal regions plus 18 regions in the volume beyond the y-axis, for a total of 108 azimuthal regions. Typically, a sector is divided into 3 or 4 equal sectors each with a source probability of one-third or one-quarter of the original probability. The energy and angular distributions of the original sector are used in each of these sub-sectors. Axially all 25 nodes were present. The information from the intermediate run is processed into the 2700 (108x25) regions and the correct spatial, energy and angular distributions are specified using the generalized source setup in MCNP. The regions all had thickness of 0.001 cm and represented degenerate cylindrical volume sources. The reference direction for determining the angle of the source particle is fixed as the angle bisecting each sector, rather than the unit outward normal at the starting point on a cylindrical surface. The angle and energy distributions are dependent on the cell where the source particle is started. The starting weight for each source particle is set to 1. The final correct weight is applied to the tallies when the absolute source term is calculated at each exposure point. This weight took into account the original weight from the criticality calculation crossing the surface per source neutron. Thus, the absolute values of the specific activities can be calculated using the power and other quantities at each state point.

The reaction rates per source neutron obtained from the MCNP runs are converted into actual reaction rates using the appropriate power at the particular point in the cycle. These are then converted to the appropriate activities at the end of cycle using simple time convolution with the correct decay terms. These calculations are done for the four state points chosen.

If $T_N$ is the total cycle time, then the activity per gram at EOC for a time step $(T_i - T_{i-1})$ is given by,

$$A_g(T_i) = (\gamma \Sigma_{p,i}\, \phi_i\, \lambda\, /\, \Lambda_i\, \rho)\, [1 - e^{-\Lambda_i \Delta T_i}]\, e^{-\Lambda_i (T_N - T_i)}$$

where

$\Sigma_{p,i}$ = production cross section, cm$^{-1}$ (fission, n-$\gamma$, etc.) at time step i.

$\phi_i$ = flux (fast or thermal as appropriate) in neutrons/cm2-sec at time step i.

$\gamma$ = 1 for non-fission product isotopes.

= yield fraction for fission product isotope.

$\Lambda$ = effective decay constant, sec$^{-1}$, which includes the standard decay constant, $\lambda$,

and a removal term due to absorption in the activation product, $\sigma_r \phi$, or $\Lambda = \lambda + \sigma_r \phi$ and,

$$\Lambda_i = \lambda + \left\{ \left[ \sum_{j=i}^{N} \sigma_{r,j}\, \phi_j\, \Delta T_j \right] / \sum_{j=i}^{N} \Delta T_j \right\}.$$

$\rho$ = density of the wire in g/cc.

Here $\Delta T_i$ is the time interval for time step i, and $T_N - T_i$ represents the time from the end of time step i to EOC. Thus, the first decay term in brackets represents the period when both production and decay is occurring and the second decay term, $e^{-\Lambda_i (T_N - T_i)}$, represents decay alone for the remaining time to the EOC. Usually, in the annulus region, the removal of the activation product by absorption is negligible ($\lambda >> \sigma_r \phi$) and the decay constant reverts to the true decay constant, $\lambda$. The total activity per gram at EOC is given by summing the individual time step values.

$$\text{Total } A_g(T_N) = \sum_i (\gamma \Sigma_{p,i}\, \phi_i\, /\, \rho)\, [1 - e^{-\lambda \Delta T_i}]\, e^{-\lambda (T_N - T_i)}$$

This number is compared with the measured dps/g data obtained from the tests. The calculation-to-measurement ratios (C/M ratios) were used as a measure of the validity of the calculations to validate the thermal and fast neutron fields.

An adequate representation of the ex-core water density distribution is important for reliable fluence and dose rate calculations. In the outer bypass region (the region between the core and the shroud), there is an axial and radial variation in the water density distribution due to the existing temperature gradient. However, this variation is small and an average density of 0.762 g/cc is used. On the other side, the temperature gradient variation is more significant in the annular region between the shroud and the RPV due to the following facts:

1. Large temperature differences exist between the RPV outer wall (at about 50°C) and the shroud outer wall (at about 270°C).

2. Feedwater supply from the sparger nozzle jets is not uniformly distributed.

3. The mixing of the steam-separator-discharged water and the feedwater through the annular region is affected by the flow path geometry differences; for example, the temperature gradient across the annular region in the presence of jet pumps is quite different from that in the absence of jet pumps.

Consequently, different radial temperature gradient profiles exist along various azimuthal directions. Therefore, different radial water density distributions are used in the fluence calculations for different sets of azimuthal cases.

EP 1 687 623 B1

In the absence of any detailed thermal hydraulic data for obtaining the actual water density distribution profile, an effective physical model is used to develop the water density profile such that the total amount of water across the annulus region is preserved. This is achieved by gradually increasing the density radially outward while preserving the total water mass. About 12 cm from the RPV wall, the slope was increased due the fact that there is a larger temperature gradient between the water and the RPV. In addition, the radial water density profile also has an axial dependence due to the different degree of water mixing during the downward flow. In the present model, the axial variation of the radial water density profile is ignored and a single profile is used throughout the cycle.

The nuclear data used is derived from a combination of ENDF/B-V and ENDF/B-VI data. The data is processed into a continuous energy form for neutrons at the operating temperatures for the fuels. Thermal scattering data for hydrogen in water is also used to treat this phenomenon. ENDF/B-V data is used for the core calculations, since it has been shown by careful benchmarking of light water reactor critical experiments, that the combination of MCNP and ENDF/B-V data produces the best results. ENDF/B-VI data is used for iron and oxygen and all the activation reactions. For example, the cross section of iron has undergone many revisions and, since the ENDF/B-VI represents the latest set of available data, this set presents the best choice for these simulations. In all cases, continuous energy data is used.

While the invention has been described in terms of various specific embodiments, those skilled in the art will recognize that the invention can be practiced with modification within the scope of the claims.

**Claims**

1.  A method (70) for estimating a helium content of a stainless steel core shroud (20) in a boiling water nuclear reactor, the reactor comprising a reactor pressure vessel (10), a reactor core (22) surrounded by the core shroud positioned in the reactor pressure vessel, the reactor core comprising a plurality of fuel rods, said method comprising:

    determining (72) a neutron fluence for predetermined areas of the reactor; and
    estimating (74) a helium content of the stainless steel shroud at predetermined areas of the reactor using the following equation:

$$C_{He} = 1031 * \left(1 - e^{-b_j * \phi_j}\right)$$

    where

    $C_{He}$ is the helium concentration as atomic parts per billion of helium in the stainless steel shroud per weight parts per million of boron in the stainless steel shroud;
    $b_j$ is a value between about $2.50e^{-21}$ and about $5.00e^{-21}$;
    $\phi_j$ is fluence expressed as neutrons per square centimeter; and
    subscript j denotes thermal fluence or fast fluence.

2.  A method (70) in accordance with Claim 1 wherein determining (72) a neutron fluence comprises:

    measuring (76) thermal or fast neutron fluxes in a reactor; and
    calculating neutron fluences based on the measured thermal or fast neutron fluxes.

3.  A method (70) in accordance with Claim I wherein determining (72) a neutron fluence comprises simulating (78) the neutron fluence by using a Monte Carlo radiation transport methodology.

4.  A method (70) in accordance with Claim 3 wherein simulating (78) the thermal fluence map by using a Monte Carlo radiation transport methodology comprises:

    generating (80) a geometric configuration of a nuclear reactor core and surrounding components;
    generating (82) a fuel composition distribution;
    calculating (84) three-dimensional nuclide concentrations for the fuel rods and water surrounding the fuel rods using the generated geometric configuration and generated fuel composition distribution;
    calculating (86) neutron fluxes using a Monte Carlo radiation transport criticality mode methodology; and
    integrating neutron fluxes at predetermined exposure points of the fuel cycle over time to obtain neutron fluences at the predetermined exposure points.

**5.** A method (70) in accordance with Claim 4 wherein calculating (86) neutron fluxes comprises calculating neutron fluxes using at least one of a Monte Carlo radiation transport criticality mode methodology and a Monte Carlo radiation transport successive criticality mode and fixed source mode methodology.

**6.** A method (70) in accordance with Claim 4 wherein generating a fuel composition distribution comprises:

calculating (90) node-wise void and exposure distributions of the reactor core; and
calculating (92) exposure and void dependent rod-by-rod nuclide concentrations.

**7.** A method (70) in accordance with Claim 6 wherein calculating (84) three-dimensional nuclide concentrations for the fuel rods and the water surrounding the fuel rods comprises interpolating the node-wide void and exposure distributions of the reactor core and the exposure and void dependent rod-by-rod nuclide concentrations to generate input for the Monte Carlo radiation transport criticality mode methodology.

**8.** A method (70) in accordance with Claim 7 wherein calculating (86) neutron fluxes comprises calculating (94) neutron fluxes using at least one of a Monte Carlo radiation transport criticality mode methodology and a Monte Carlo radiation transport successive criticality mode and fixed source mode methodology at a beginning of a full power phase of a fuel cycle.

**9.** A method (70) in accordance with Claim 8 wherein calculating (86) neutron fluxes further comprises calculating (96) neutron fluxes using at least one of a Monte Carlo radiation transport criticality mode methodology and a Monte Carlo radiation transport successive criticality mode and fixed source mode methodology at a middle of the full power phase of the fuel cycle.

**10.** A method (70) in accordance with Claim 9 wherein calculating neutron fluxes further comprises calculating (98) neutron fluxes using at least one of a Monte Carlo radiation transport criticality mode methodology and a Monte Carlo radiation transport successive criticality mode and fixed source mode methodology at an end of the full power phase of the fuel cycle.

**Patentansprüche**

**1.** Verfahren (70) zum Abschätzen eines Heliumanteils eines Kernmantels (20) aus rostfreiem Stahl in einem Siedewasserkernreaktor, in dem der Reaktor einen Reaktordruckbehälter (10) und einen von dem in dem Reaktordruckbehälter angeordneten Kernmantel umgebenen Reaktorkern (22) aufweist, wobei der Reaktorkern mehrere Brennstoffstäbe aufweist, und das Verfahren die Schritte umfasst:

Ermitteln (72) einer Neutronenfluenz (Flussdichte) für vorbestimmte Bereiche des Reaktors; und
Abschätzen (74) eines Heliumanteils des Mantels aus rostfreiem Stahl an vorbestimmten Bereichen des Reaktors unter Verwendung der nachstehenden Gleichung:

$$C_{He} = 1031 \cdot \left(1 - e^{b_j \phi_j}\right)$$

wobei

$C_{He}$ die Heliumkonzentration als appb (Atomteile pro Milliarde) von Helium in dem Mantel aus rostfreiem Stahl pro wppm (Gewichteile pro Million) Bor in dem Mantel aus rostfreiem Stahl ist;
$b_j$ ein Wert zwischen etwa 2, 50e$^{-21}$ und etwa 5, 00e$^{-21}$ ist;
$\phi_j$ die als Neutronen pro Quadratzentimeter ausgedrückte Fluenz ist; und
der Index j die thermische Fluenz oder schnelle Fluenz bezeichnet.

**2.** Verfahren (70) nach Anspruch 1, wobei die Ermittlung (72) einer Neutronenfluenz die Schritte aufweist:

Messen (76) von thermischen oder schnellen Neutronenflüssen in einem Reaktor; und

Berechnen von Neutronenfluenzen auf der Basis der gemessenen thermischen oder schnellen Neutronenflüsse.

3. Verfahren (70) nach Anspruch 1, wobei die Ermittlung (72) einer Neutronenfluenz die Simulation (78) der Neutronenfluenz unter Verwendung einer Monte Carlo Strahlungstransport-Methodik umfasst.

4. Verfahren (70) nach Anspruch 3, wobei eine Simulation (78) der karte einer thermischen Fluenz unter Verwendung einer Monte Carlo Strahlungstransport-Methodik die Schritte umfasst:

Generieren (80) einer geometrischen Konfiguration eines Kernreaktorkerns und umgebender Komponenten;
Generieren (82) einer Brennstoffzusammensetzungsverteilung;
Berechnen (84) dreidimensionaler Nuklidkonzentrationen für die Brennstoffstäbe und die Brennstoffstäbe umgebendes Wasser unter Verwendung der generierten geometrischen Konfiguration und generierten Brennstoffzusammensetzungsverteilung;
Berechnen (86) von Neutronenflüssen eines Monte Carlo Strahlungstransport-Kritikalitätsmodus-Methodik; und
Integrieren von Neutronenflüssen an vorbestimmten Bestrahlungspunkten des Brennstoffzyklusses über der Zeit, um Neutronenfluenzen an den vorbestimmten Bestrahlungspunkten zu erhalten.

5. Verfahren (70) nach Anspruch 4, wobei die Berechnung (86) von Neutronenflüssen die Berechnung von Neutronenflüssen unter Verwendung von wenigstens einer von einer Monte Carlo Strahlungstransport-Kritikalitätsmodus-Methodik und einer Monte Carlo Strahlungstransport-Sukzessivkritikalitätsmodus- und Festquellenmodusmethodik umfasst.

6. Verfahren (70) nach Anspruch 4, wobei die Generierung einer Brennstoffzusammensetzungsverteilung, die Schritte umfasst:

knotenweises Berechnen von Verteilungen von Leerstellen- und Bestrahlungsstellen des Reaktorkerns; und
Berechnen (92) bestrahlungsstellen- und leerstellenabhängiger Nuklidkonzentrationen von Stab zu Stab.

7. Verfahren (70) nach Anspruch 6, wobei die Berechnung (84) dreidimensionaler Nuklidkonzentrationen für die Brennstoffstäbe und das die Brennstoffstäbe umgebende Wasser eine Interpolation der knotenweisen Leerstellen- und Bestrahlungsstellenverteilungen des Reaktorkerns und die bestrahlungs- und leerstellenabhängigen Nuklidkonzentrationen von Stab zu Stab umfasst, um eine Eingangsgröße für die Monte Carlo Strahlungstransport-Kritikalitätsmodus-Methodik zu generieren.

8. Verfahren (70) nach Anspruch 7, wobei die Berechnung (86) von Neutronenflüssen die Berechnung (94) von Neutronenflüssen unter Verwendung von wenigstens einer von der Monte Carlo Strahlungstransport-Kritikalitätsmodus-Methodik und einer Monte Carlo Strahlungstransport-Sukzessivkritikalitätsmodus- und einer Festquellenmodus-Methodik zu Beginn einer Volllastphase eines Brennstoffzyklusses umfasst.

9. Verfahren (70) nach Anspruch 8, wobei die Berechnung (86) von Neutronenflüssen die Berechnung (96) von Neutronenflüssen unter Verwendung von wenigstens einer von einer Monte Carlo Strahlungstransport-Kritikalitätsmodus-Methodik und einer Monte Carlo Strahlungstransport-Sukzessivkritikalitätsmodus- und einer Festquellenmodus-Methodik in der Mitte einer Volllastphase eines Brennstoffzyklusses umfasst.

10. Verfahren (70) nach Anspruch 9, wobei die Berechnung von Neutronenflüssen die Berechnung (96) von Neutronenflüssen unter Verwendung von wenigstens einer von einer Monte Carlo Strahlungstransport-Kritikalitätsmodus-Methodik und einer Monte Carlo Strahlungstransport-Sukzessivkritikalitätsmodus- und einer Festquellenmodus-Methodik am Ende einer Volllastphase eines Brennstoffzyklusses umfasst.

**Revendications**

1. Procédé (70) d'estimation de la teneur en hélium d'une enveloppe de coeur en acier inoxydable (20) dans un réacteur nucléaire à eau bouillante, le réacteur comprenant une cuve de réacteur sous pression (10), un coeur de réacteur (22) entouré par l'enveloppe de coeur positionnée dans la cuve de réacteur sous pression, le coeur de réacteur comprenant une pluralité de barres de combustible, ledit procédé comprenant :

la détermination (72) d'une fluence de neutrons pour des régions prédéterminées du réacteur ; et

l'estimation (74) d'une teneur en hélium de l'enveloppe en acier inoxydable dans des régions prédéterminées du réacteur en utilisant l'équation suivante :

$$C_{He} = 1031 * \left(1 - e^{-b_j * \phi_j}\right)$$

où

$C_{He}$ est la concentration en hélium, exprimée en parties atomiques par milliard d'hélium dans l'enveloppe en acier inoxydable par partie en poids par million de bore dans l'enveloppe en acier inoxydable;
$b_j$ est une valeur comprise entre environ $2,50e^{-21}$ et environ $5,00e^{-21}$;
$\phi_j$ est la fluence exprimée en neutrons par centimètre carré ; et
l'indice j désigne la fluence thermique ou fluence rapide.

2. Procédé (70) selon la revendication 1, dans lequel la détermination (72) d'une fluence de neutrons comprend :

la mesure (76) de flux de neutrons thermiques ou rapides dans un réacteur ; et
le calcul de fluences de neutrons basées sur les flux de neutrons thermique ou rapides mesurés.

3. Procédé (70) selon la revendication 1, dans lequel la détermination (72) d'une fluence de neutrons comprend le fait de simuler (78) la fluence de neutrons en utilisant une méthode de transport de rayonnement de Monte Carlo.

4. Procédé (70) selon la revendication 3, dans lequel la simulation (78) de la carte de fluence thermique en utilisant une méthode de transport de rayonnement de Monte Carlo comprend les opérations consistant à :

générer (80) une configuration géométrique d'un coeur de réacteur nucléaire et entourer des composants ;
générer (82) une distribution de composition de combustible ;
calculer (84) des concentrations de nucléides en trois dimensions pour les barres de combustible et l'eau entourant les barres de combustible en utilisant la configuration géométrique générée et la distribution de composition de combustible générée ;
calculer (86) des flux de neutrons en utilisant une méthode de mode de criticité de transport de rayonnement de Monte Carlo ; et
intégrer dans le temps les flux de neutrons en des points d'exposition prédéterminés du cycle de combustible pour obtenir des fluences de neutrons aux points d'exposition prédéterminés.

5. Procédé (70) selon la revendication 4, dans lequel le calcul (86) de flux de neutrons comprend le calcul de flux de neutrons en utilisant au moins une méthode parmi une méthode de mode de criticité de transport de rayonnement de Monte Carlo et une méthode de mode de criticité et mode de source fixe successifs de transport de rayonnement de Monte Carlo.

6. Procédé (70) selon la revendication 4, dans lequel la génération d'une distribution de composition de combustible comprend :

le calcul (90) de distributions de vide et d'exposition dans le sens des noeuds du coeur de réacteur ; et
le calcul (92) de concentrations en nucléides barre par barre dépendant de l'exposition et du vide.

7. Procédé (70) selon la revendication 6, dans lequel le calcul (84) de concentrations en nucléides en trois dimensions pour les barres de combustible et l'eau entourant les barres de combustible comprend le fait d'interpoler les distributions de vide et d'exposition dans le sens des noeuds du coeur de réacteur et les concentrations en nucléides barre par barre dépendant de l'exposition et du vide pour générer une entrée pour la méthode de mode de criticité de transport de rayonnement de Monte Carlo.

8. Procédé (70) selon la revendication 7, dans lequel le calcul (86) de flux de neutrons comprend le calcul (94) de flux de neutrons en utilisant au moins une méthode parmi une méthode de mode de criticité de transport de rayonnement de Monte Carlo et une méthode de mode de criticité et mode de source fixe successifs de transport de rayonnement de Monte Carlo au début d'une phase de pleine puissance d'un cycle de combustible.

**9.** Procédé (70) selon la revendication 8, dans lequel le calcul (86) de flux de neutrons comprend en outre le calcul (96) de flux de neutrons en utilisant au moins une méthode parmi une méthode de mode de criticité de transport de rayonnement de Monte Carlo et une méthode de mode de criticité et mode de source fixe successifs de transport de rayonnement de Monte Carlo au milieu de la phase de pleine puissance du cycle de combustible.

**10.** Procédé (70) selon, la revendication 9, dans lequel le calcul de flux de neutrons comprend en outre le calcul (98) de flux de neutrons en utilisant au moins une méthode parmi une méthode de mode de criticité de transport de rayonnement de Monte Carlo et une méthode de mode de criticité et mode de source fixe successifs de transport de rayonnement de Monte Carlo à la fin de la phase de pleine puissance du cycle de combustible.

FIG.1

70

72

Determine A Neutron Fluence For Predetermined Areas Of The Reactor

Measuring Neutron Fluxes In The Reactor

76

Determine Neutron Flux Using A Monte Carlo Radiation Transport Methodology

78

74

Estimate Helium Content Of Components Using Equation:

$$C_{He} = 1031 * \left(1 - e^{-b_j \cdot \phi_j}\right)$$

# FIGURE 2

```
                                                              /  78
80    ┌──────────────────────────┐
      │ Generate A Detailed Geometric │
      │ Configuration Of A Nuclear    │
      │ Reactor Core And Surrounding  │
      │ Components                    │
      └──────────────────────────┘
                    │
                    ▼                                    ┌─ 90
82    ┌──────────────────────────┐          ┌──────────────────────────┐
      │ Generate Detailed Fuel        │ ◄──────  │ Calculate Nodewide Void And   │
      │ Composition And Concentration │          │ Exposure Distributions Of The │
      │ Distribution                  │          │ Reactor Core                  │
      │                               │          └──────────────────────────┘
      │                               │
      │                               │          ┌──────────────────────────┐
      │                               │ ◄──────  │ Calculate Exposure And Void   │
      │                               │          │ Dependent Rod-By-Rod          │
      │                               │          │ Nuclide Concentrations        │
      └──────────────────────────┘          └──────────────────────────┘
                    │                                         └─ 92
                    ▼
84    ┌──────────────────────────┐
      │ Calculate Three-Dimensional   │
      │ Nuclide Concentrations For The│
      │ Fuel Rods And The Water       │
      │ Surrounding The Fuel Rods     │
      └──────────────────────────┘
                    │
                    ▼                                    ┌─ 94
86    ┌──────────────────────────┐          ┌──────────────────────────┐
      │ Calculate Neutron Flux Using A│ ◄──────  │ Calculate Neutron Fluxes At A │
      │ Monte Carlo Radiation Transport│          │ Beginning Of The Full Power   │
      │ Criticality Mode Methodology  │          │ Phase Of The Fuel Cycle       │
      │                               │          └──────────────────────────┘
      │                               │                     ┌─ 96
      │                               │          ┌──────────────────────────┐
      │                               │ ◄──────  │ Calculate Neutron Fluxes At A │
      │                               │          │ Middle Of The Full Power      │
      │                               │          │ Phase Of The Fuel Cycle       │
      │                               │          └──────────────────────────┘
      │                               │                     ┌─ 98
      │                               │          ┌──────────────────────────┐
      │                               │ ◄──────  │ Calculate Neutron Fluxes At An│
      │                               │          │ End Of The Full Power Phase   │
      │                               │          │ Of The Fuel Cycle             │
      └──────────────────────────┘          └──────────────────────────┘
                    │
                    ▼
88    ┌──────────────────────────┐
      │ Generate Neutron Fluences For │
      │ Predetermined Areas Of The    │
      │ Reactor                       │
      └──────────────────────────┘
```

# FIGURE 3

FIGURE 4

# FIGURE 5